# EUROPEAN PATENT APPLICATION

(11) **EP 4 844 110 A1**
(43) Date of publication of application: **25.11.2026**
(21) Application number: 24954114.5
(22) Date of filing: 14.09.2024
(51) Int. Cl.: C25B 11/032, C25B 9/23, C25B 11/075, C25B 11/093, C25B 11/052, C25B 1/04, H01M 4/88

(54) **ANODE COMPOSITE CATALYST LAYER AND SLURRY THEREOF, PREPARATION METHOD, AND MEMBRANE ELECTRODE**

(30) Priority: 11.09.2024 CN 202411270858
(71) Applicant: Anhui Contango New Energy Technology Co, Ltd., Anhui 230000 (CN)
(72) Inventor: WANG, Xinlei, Hefei, Anhui 230000 (CN); WU, Shouliang, Hefei, Anhui 230000 (CN); ZHANG, Xian, Hefei, Anhui 230000 (CN); SUN, Dianding, Hefei, Anhui 230000 (CN)
(74) Representative: Banse & Steglich Patentanwälte PartmbB
(86) International application number: PCT/CN2024/119041
(87) International publication number: WO 2026/055963

(57) **Abstract**

Disclosed in the present application are an anode composite catalyst layer and a slurry thereof, a preparation method, and a membrane electrode. The anode composite catalyst layer is located between a proton exchange membrane and a gas diffusion layer of the membrane electrode, and comprises: an iridium catalyst layer, which has a first surface and a second surface which are opposite to each other, wherein the first surface faces the proton exchange membrane and the second surface faces the gas diffusion layer, and the iridium catalyst layer comprises a first ionomer and an iridium catalyst dispersed in the first ionomer; and a platinum-conducting layer, which has a third surface and a fourth surface which are opposite to each other, wherein the third surface is in contact with the second surface of the iridium catalyst layer, and the fourth surface faces the gas diffusion layer, and the platinum-conducting layer comprises a second ionomer and platinum nano-particles which are dispersed in the second ionomer and have a particle size of 10-500 nm. The anode composite catalyst layer of the present application can endow the membrane electrode with a relatively low contact resistance and excellent stability.

## Description

### TECHNICAL FIELD

The present application relates to the technical field of membrane electrodes for proton exchange membrane water electrolysis, and in particular to an anode composite catalyst layer and a slurry thereof, a preparation method, and a membrane electrode.

### BACKGROUND

A membrane electrode assembly (MEA), also referred to as a membrane electrode, mainly consists of a proton exchange membrane (PEM), a catalyst layer (CL), and a gas diffusion layer (GDL). The catalyst layer is the location where electrochemical reactions take place, and it can significantly reduce activation energy required for the reactions, thereby accelerating rate of electrochemical reactions.

The catalyst layer of a membrane electrode assembly comprises an anode catalyst layer and a cathode catalyst layer. The anode catalyst layer can promote a hydrogen oxidation reaction (HOR), while the cathode catalyst layer can promote an oxygen reduction reaction (ORR), both of which have a significant impact on performances of the membrane electrode.

Since performances of current membrane electrodes still need improvement, there remains a need to further improve the catalyst layer.

### SUMMARY

An object of the present application is to provide an anode composite catalyst layer and a slurry thereof, a preparation method, and a membrane electrode, so that the membrane electrode has both low contact resistance and excellent stability.

To achieve the above object, the present application provides the following technical solutions.

In a first aspect, the present application provides an anode composite catalyst layer, which is located between a proton exchange membrane and a gas diffusion layer of a membrane electrode, comprising: an iridium catalyst layer having a first surface and a second surface which are opposite to each other, wherein the first surface faces the proton exchange membrane and the second surface faces the gas diffusion layer, the iridium catalyst layer comprising a first ionomer and an iridium catalyst dispersed in the first ionomer; and a platinum-conductive layer having a third surface and a fourth surface which are opposite to each other, wherein the third surface is in contact with the second surface of the iridium catalyst layer, and the fourth surface faces the gas diffusion layer, the platinum-conductive layer comprising a second ionomer and platinum nanoparticles having a particle size of 10 nm to 500 nm dispersed in the second ionomer.

In some embodiments of the first aspect, the platinum nanoparticles have a particle size of 90 nm to 120 nm; the platinum-conductive layer has a thickness of 0.3 µm to 1.5 µm; and a mass ratio of the platinum nanoparticles to the second ionomer is 1:(0.35 to 0.9).

In some embodiments of the first aspect, the first ionomer and the second ionomer each independently comprise one or more of Nafion D2020, Nafion NR50, Aquivion D79-25B, and HCD-1820.

In some embodiments of the first aspect, the iridium catalyst is at least one of IrO₂, IrRuOₓ₁, IrO₂/TiO₂, IrO₂/NbOₓ₁, IrO₂/Ta₂O₅, IrO₂/WOₓ₁, or IrO₂/Nb₂O₅₋ₓ₂, wherein x₁ is 1 to 2, and x₂ is 0 to 3.

In a second aspect, the present application provides an anode composite catalyst layer slurry, comprising: an iridium catalyst layer slurry comprising an iridium catalyst, a first ionomer, and a first solvent; and a platinum-conductive layer slurry comprising platinum nanoparticles having a particle size of 10 nm to 500 nm, a second ionomer, and a second solvent.

In some embodiments of the second aspect, a mass ratio of the iridium catalyst, the first ionomer, and the first solvent is 1:(0.1 to 0.5):(5 to 50); and a mass ratio of the platinum nanoparticles, the second ionomer, and the second solvent is 1:(0.35 to 0.9):(10 to 50).

In some embodiments of the second aspect, the first ionomer and the second ionomer each independently comprise one or more of Nafion D2020, Nafion NR50, Aquivion D79-25B, and HCD-1820; the iridium catalyst is at least one of IrO₂, IrRuOₓ, IrO₂/TiO₂, IrO₂/NbOₓ, IrO₂/Ta₂O₅, IrO₂/WOₓ, or IrO₂/Nb₂O₅₋ₓ; and the first solvent and the second solvent are the same or different and are each independently at least one of selected from isopropanol, ethylene glycol, ethanol, n-propanol, and water.

In a third aspect, the present application provides a method for preparing an anode composite catalyst layer, characterized in that the anode composite catalyst layer slurry according to the second aspect is used for the preparation method.

In some embodiments of the third aspect, the preparation method comprises: forming an iridium catalyst layer on a surface of a proton exchange membrane of a membrane electrode by a coating or transfer method using an iridium catalyst layer slurry; and forming a platinum-conductive layer on a surface of the iridium catalyst layer by a coating or transfer method using the platinum-conductive layer slurry; alternatively the preparation method comprises: forming a platinum-conductive layer on a transfer substrate by a coating or transfer method using a platinum-conductive layer slurry; forming an iridium catalyst layer on a surface of the platinum-conductive layer by a coating method using an iridium catalyst layer slurry; and transferring a laminate structure of the platinum-conductive layer and the iridium catalyst layer onto a surface of a proton exchange membrane by a transfer method, while removing the transfer substrate.

In a fourth aspect, the present application provides a membrane electrode, comprising a proton exchange membrane, a gas diffusion layer, and the anode composite catalyst layer according to the first aspect.

Compared with the prior art, the technical solutions of the present application have the following beneficial effects.

In the present application, a platinum-conductive layer is provided between an iridium catalyst layer and a gas diffusion layer. The platinum-conductive layer can significantly reduce contact resistance between the iridium catalyst layer and the gas diffusion layer, and can further reduce thermal stress of the membrane electrode, thereby improving stability of the membrane electrode. By controlling the particle size of the platinum nanoparticles in the platinum-conductive layer, the contact resistance and stability of the membrane electrode can be further balanced.

### BRIEF DESCRIPTION OF THE DRAWINGS

The accompanying drawings, which are incorporated in and constitute a part of this specification, illustrate exemplary embodiments disclosed in the present application. Like reference numerals in the drawings represent similar structures throughout the several views. It will be understood by those of ordinary skill in the art that these embodiments are non-limiting, exemplary embodiments, and the drawings are for illustration and description purposes only, and are not intended to limit the scope of the present application. Other embodiments may equally accomplish the inventive intent of the present application. It should be understood that the drawings are not drawn to scale. In the drawings:
FIG. 1 is an exploded schematic view of a membrane electrode according to an embodiment of the present application;
FIG. 2 is a schematic flow chart of a method for preparing an anode composite catalyst layer according to an embodiment of the present application;
FIG. 3 is a schematic flow chart of a method for preparing an anode composite catalyst layer according to another embodiment of the present application;
FIG. 4 is an XRD pattern of the platinum-conductive layer prepared in Example 1 of the present application;
FIG. 5 is a TEM image of the platinum-conductive layer prepared in Example 1 of the present application.

### DETAILED DESCRIPTION

The following description provides specific application scenarios and requirements of the present application, with the purpose of enabling any person skilled in the art to make and use the content of the present application. Various local modifications to the disclosed embodiments will be readily apparent to those skilled in the art, and the general principles defined herein may be applied to other embodiments and applications without departing from the spirit and scope of the present application. Therefore, the present application is not limited to the embodiments shown, but is to be accorded the broadest scope consistent with the claims.

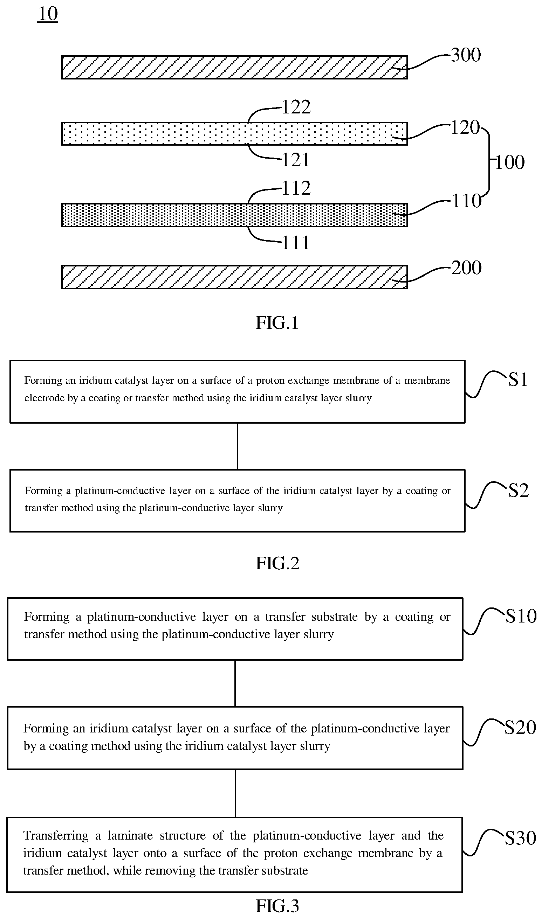

Referring to FIG. 1, an anode composite catalyst layer 100 disclosed in the present application is located between a proton exchange membrane 200 and a gas diffusion layer 300 of a membrane electrode 10, and comprises: an iridium catalyst layer 110 and a platinum-conductive layer 120. The iridium catalyst layer 110 has a first surface 111 and a second surface 112 which are opposite to each other, wherein the first surface 111 faces the proton exchange membrane 200, and the second surface 112 faces the gas diffusion layer 300, and wherein the iridium catalyst layer 110 comprises a first ionomer and an iridium catalyst dispersed in the first ionomer. The iridium catalyst layer 110 is used to promote a hydrogen oxidation reaction.

The platinum-conductive layer 120 has a third surface 121 and a fourth surface 122 which are opposite to each other, wherein the third surface 121 is in contact with the second surface 112 of the iridium catalyst layer 110, and the fourth surface 122 faces the gas diffusion layer 300, and wherein the platinum-conductive layer 120 comprises a second ionomer and platinum nanoparticles dispersed in the second ionomer. The platinum-conductive layer 120 can significantly reduce contact resistance between the iridium catalyst layer 110 and the gas diffusion layer 300, allowing electrons to flow rapidly from the iridium catalyst layer 110 to the gas diffusion layer 300, and thereby increasing current density of the membrane electrode for proton exchange membrane water electrolysis. At the same time, the platinum-conductive layer 120 can also optimize interface structure between the iridium catalyst layer 110 and the gas diffusion layer 300, thereby enhancing gas diffusion effects and helping to reduce polarization during the anodic reaction, allowing more of the oxygen generated by the reaction to rapidly diffuse into the flow field. Therefore, the introduction of the platinum-conductive layer 120 can effectively improve performances of the membrane electrode for proton exchange membrane water electrolysis.

The introduction of the platinum-conductive layer 120 can further help to improve stability and durability of the membrane electrode for proton exchange membrane water electrolysis. Because platinum has good corrosion resistance and chemical stability, it can not only maintain stable performance in the harsh operating environment of the membrane electrode for proton exchange membrane water electrolysis, but also protect the iridium catalyst layer 110 from erosion by electrolytes or other corrosive substances, helping to extend service life of the anode composite catalyst layer 100. Furthermore, because the platinum-conductive layer 120 can reduce contact resistance, it can solve the problem of significant heat accumulation due to excessive contact resistance, thereby slowing down the thermal aging process of the membrane electrode for proton exchange membrane water electrolysis.

In addition to reducing contact resistance, the platinum-conductive layer 120 can further produce a synergistic catalytic effect with the iridium catalyst layer 110, making the catalytic activity of the anode composite catalyst layer 100 higher than that of a single catalyst layer. At the same time, the platinum-conductive layer 120 covering the iridium catalyst layer 110 can further increase the number of active sites for the catalyst. These active sites can more effectively adsorb and convert reactants, thereby increasing the catalytic reaction rate.

The particle size of the platinum nanoparticles in the platinum-conductive layer 120 has a critical impact on the contact resistance and stability of the membrane electrode. If the particle size of the platinum nanoparticles is too large, the contact resistance will be high, hindering electron transport and thereby reducing performances of the membrane electrode for proton exchange membrane water electrolysis. On the other hand, if the particle size of the platinum nanoparticles is too small, the particles will have higher specific surface area, resulting in high surface energy, which makes the nanoparticles prone to instability phenomena such as aggregation, sedimentation, or dissolution. The inventors of the present application have found through research that when the particle size of the platinum nanoparticles is in the range of 10 nm to 500 nm, the contact resistance and stability of the membrane electrode can be well balanced.

In some preferred embodiments, the platinum nanoparticles have a particle size of 90 nm to 120 nm. More preferably, the platinum nanoparticles have a particle size of 95 nm to 110 nm. Most preferably, the platinum nanoparticles have a particle size of 100 nm, allowing the membrane electrode to achieve an optimal balance between contact resistance and stability.

The thickness of the platinum-conductive layer 120 would affect contact resistance and stability of the membrane electrode. As the thickness of the platinum-conductive layer 120 increases, the path for reactant gas from the gas diffusion layer to the surface of the catalyst layer becomes longer, thereby increasing mass transfer resistance, which slows down diffusion rate of the reactant gas in the catalyst layer, affecting the rate and efficiency of the electrochemical reactions. At the same time, an increase in the thickness of the platinum-conductive layer 120 further increases contact resistance, reduces current density of the cell, and increases heat generation and accumulation, which is detrimental to stability and high-voltage durability of the membrane electrode. Furthermore, when the platinum-conductive layer 120 is too thick, it can affect transport and distribution of water, potentially leading to flooding or dry-out inside the membrane electrode, thereby affecting performances and lifespan of the cell. In some preferred embodiments, the platinum-conductive layer has a thickness of 1.5 µm to 1.8 µm. Preferably, the platinum-conductive layer has a thickness of 0.50 µm to 0.70 µm.

A mass ratio of the platinum nanoparticles to the second ionomer affects both electrical conductivity and ionic conductivity. In some preferred embodiments, the mass ratio of the platinum nanoparticles to the second ionomer is 1:(0.35 to 0.9). Preferably, the mass ratio of the platinum nanoparticles to the second ionomer is 1:(0.35 to 0.5).

In some preferred embodiments, both the first ionomer and the second ionomer comprise a perfluorosulfonic acid resin. Further preferably, the first ionomer and the second ionomer each independently comprise one or more of Nafion D2020, Nafion NR50, Aquivion D79-25B, and HCD-1820. More preferably, the first ionomer and the second ionomer each independently comprise Nafion D2020.

In some preferred embodiments, the iridium catalyst is at least one of IrO₂, IrRuOₓ₁, IrO₂/TiO₂, IrO₂/NbOₓ₁, IrO₂/Ta₂O₅, IrO₂/WOₓ₁, or IrO₂/Nb₂O₅₋ₓ₂, wherein x₁ is 1 to 2, and x₂ is 0 to 3.

The present application further provides an anode composite catalyst layer slurry, comprising: an iridium catalyst layer slurry and a platinum-conductive layer slurry. The iridium catalyst layer slurry comprises an iridium catalyst, a first ionomer, and a first solvent. The platinum-conductive layer slurry comprises platinum nanoparticles having a particle size of 10 nm to 500 nm, a second ionomer, and a second solvent.

In some preferred embodiments, a mass ratio of the iridium catalyst, the first ionomer, and the first solvent is 1:(0.1 to 0.5):(5 to 50); and a mass ratio of the platinum nanoparticles, the second ionomer, and the second solvent is 1:(0.35 to 0.9):(10 to 50).

In some preferred embodiments, the mass ratio of the platinum nanoparticles, the second ionomer, and the second solvent is 1: (0.35 to 0.9): (10 to 50). More preferably, the ratio is 1: (0.35 to 0.5): (10 to 50). Even more preferably, the ratio is 1: (0.35 to 0.5):10.

In some preferred embodiments, both the first ionomer and the second ionomer comprise a perfluorosulfonic acid resin. Further preferably, the first ionomer and the second ionomer each independently comprise one or more of Nafion D2020, Nafion NR50, Aquivion D79-25B, and HCD-1820. More preferably, the first ionomer and the second ionomer each independently comprise Nafion D2020.

In some preferred embodiments, the iridium catalyst is at least one of IrO₂, IrRuOₓ₁, IrO₂/TiO₂, IrO₂/NbOₓ₁, IrO₂/Ta₂O₅, IrO₂/WOₓ₁, or IrO₂/Nb₂O₅₋ₓ₂, wherein x₁ is 1 to 2, and x₂ is 0 to 3.

In some preferred embodiments, the first solvent and the second solvent are the same or different and are each independently at least one selected from isopropanol, ethylene glycol, ethanol, n-propanol, and water.

In some preferred embodiments, the iridium catalyst layer slurry and the platinum-conductive layer slurry each have a solid content of 6 wt% to 15 wt%.

The present application further provides a method for the preparation of an anode composite catalyst layer, characterized in that the anode composite catalyst layer slurry as described above is used for the preparation method.

Referring to FIG. 2, in some embodiments, the method for the preparation of the anode composite catalyst layer comprises the following steps:

S1: forming an iridium catalyst layer on a surface of a proton exchange membrane of a membrane electrode by a coating or transfer method using the iridium catalyst layer slurry;

S2: forming a platinum-conductive layer on a surface of the iridium catalyst layer by a coating or transfer method using the platinum-conductive layer slurry.

Referring to FIG. 3, in other embodiments, the method for the preparation of the anode composite catalyst layer comprises the following steps:

S10: forming a platinum-conductive layer on a transfer substrate by a coating or transfer method using the platinum-conductive layer slurry;

S20: forming an iridium catalyst layer on a surface of the platinum-conductive layer by a coating method using the iridium catalyst layer slurry;

S30: transferring a laminate structure of the platinum-conductive layer and the iridium catalyst layer onto a surface of the proton exchange membrane by a transfer method, while removing the transfer substrate.

The steps of forming layers by the coating method or the transfer method described above are all carried out in a known manner.

The present application further provides a membrane electrode, comprising a proton exchange membrane, a gas diffusion layer, and the anode composite catalyst layer as described above. The proton exchange membrane and the gas diffusion layer may adopt any existing structure or material.

In some specific embodiments, the gas diffusion layer is a porous titanium diffusion layer.

In some specific embodiments, the proton exchange membrane is a perfluorosulfonic acid proton exchange membrane.

In some specific embodiments, the membrane electrode further comprises other conventional layer structures, such as a cathode catalyst layer adjacent to the proton exchange membrane.

The technical solutions of the present application will be clearly and completely described below in conjunction with the embodiments of the present application. Unless otherwise specified, the reagents and raw materials used are commercially available. For the experimental methods in the following examples for which specific conditions are not indicated, conventional methods and conditions or selections according to product instructions are used.

Iridium oxide particles were purchased from Heraeus, model H2EL-IrO; platinum nanoparticles were purchased from Johnson Matthey, model HISPEC1000; and Nafion D2020 was purchased from Chemours.

### Example 1

In this example, an anode composite catalyst layer and a preparation method thereof were provided. The anode composite catalyst layer comprised an iridium catalyst layer and a platinum-conductive layer. The iridium catalyst layer comprised Nafion D2020 and iridium oxide particles dispersed in said Nafion D2020. The platinum-conductive layer comprised Nafion D2020 and platinum nanoparticles dispersed in the Nafion D2020 and having a particle size of 100 nm.

The anode composite catalyst layer was prepared by the following steps:
(1) 2 g of 100 nm platinum nanoparticles, 1 g of Nafion D2020, 15 g of isopropanol, and 5 g of deionized water were mixed uniformly to obtain a platinum-conductive layer slurry; 2 g of iridium oxide particles, 1 g of Nafion D2020, 5 g of isopropanol, and 5 g of deionized water were mixed uniformly to obtain an iridium catalyst layer slurry.
(2) The platinum-conductive layer slurry was applied to a PTFE substrate using a coating machine followed by drying, thus a platinum-conductive layer having a thickness of 0.50 µm to 0.70 µm was obtained.
(3) The iridium catalyst layer slurry was applied to the surface of the platinum-conductive layer using a coating machine followed by drying, thus an iridium catalyst layer having a thickness of 5.0 µm to 5.3 µm was obtained.

### Example 2

The anode composite catalyst layer and the preparation method thereof in this example were the same as those of Example 1, with the exception that the particle size of the platinum nanoparticles was 10 nm.

### Example 3

The anode composite catalyst layer and the preparation method thereof in this example were the same as those of Example 1, with the exception that the particle size of the platinum nanoparticles was 50 nm.

### Example 4

The anode composite catalyst layer and the preparation method thereof in this example were the same as those of Example 1, with the exception that the particle size of the platinum nanoparticles was 200 nm.

### Example 5

The anode composite catalyst layer and the preparation method thereof in this example were the same as those of Example 1, with the exception that the particle size of the platinum nanoparticles was 500 nm.

### Example 6

The anode composite catalyst layer and the preparation method thereof in this example were the same as those of Example 1, with the exception that the thickness of the platinum-conductive layer was 1 µm to 1.5 µm.

### Comparative Example 1

The anode composite catalyst layer and the preparation method thereof in this example were the same as those of Example 1, with the exception that the particle size of the platinum nanoparticles was 5 nm.

### Comparative Example 2

The anode composite catalyst layer and the preparation method thereof in this example were the same as those of Example 1, with the exception that the particle size of the platinum nanoparticles was 550 nm.

### Comparative Example 3

The anode composite catalyst layer and the preparation method thereof in this example were the same as those of Example 1, with the exception that the mass ratio of platinum nanoparticles to Nafion D2020 was 1:0.33.

### Comparative Example 4

The anode composite catalyst layer and the preparation method thereof in this example were the same as those of Example 1, with the exception that the mass ratio of platinum nanoparticles to Nafion D2020 was 1:1.

### Comparative Example 5

The anode composite catalyst layer and the preparation method thereof in this example were the same as those of Example 1, with the exception that the thickness of the platinum-conductive layer was 0.1 µm to 0.2 µm.

### Comparative Example 6

In this comparative example, an anode catalyst layer and a preparation method thereof were provided. The anode catalyst layer comprised Nafion D2020 and iridium oxide particles dispersed in the Nafion D2020.

The anode catalyst layer was prepared by the following steps:
(1) 2 g of iridium oxide particles, 1 g of Nafion D2020, 5 g of isopropanol, and 5 g of deionized water were mixed uniformly to obtain an anode catalyst layer slurry.
(2) The anode catalyst layer slurry was applied to the surface of a perfluorosulfonic acid proton exchange membrane using a coating machine followed by drying, thus an anode catalyst layer was obtained.

### Performance Characterization

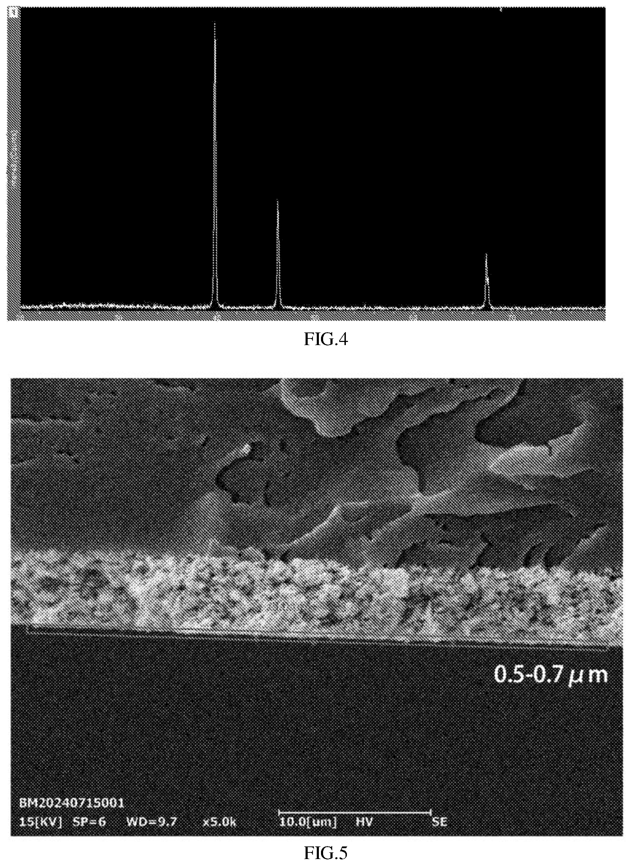

1) X-ray diffraction (XRD) measurement was performed on the platinum-conductive layer prepared in Example 1 using an X-ray diffractometer (Rigaku D/max-2500B2+/PC) over a scanning range of 10° to 90° with an angular increment of 0.03°/sec. The test results were shown in FIG. 4. It can be seen from FIG. 4 that the sample has crystal lattice corresponding to the standard card results for platinum, and the platinum black particles have an average particle size D calculated according to the following Scherrer equation of 102 nm: $D = Kλ / \left(βcosθ\right) ;$ wherein K is a constant; λ is the X-ray wavelength; β is the full width at half maximum (FWHM) of the diffraction peak; and θ is the diffraction angle. The value of the constant K depends on the definition of β. When β is the FWHM, K is 0.89; and when β is the integral breadth, K is 1.0.
2) TEM measurement was performed on the platinum-conductive layer prepared in Example 1 using an FEI TECNAI G2 F20 200KV field emission transmission electron microscope at an accelerating voltage of 200 KV. The test results were shown in FIG. 5. In FIG. 5, the layer in the red box is the platinum-conductive layer, and the layer between the red arrows is the iridium catalyst layer. The platinum-conductive layer has a thickness of 0.50 to 0.70 µm, and the platinum nanoparticles are well dispersed without agglomeration.

Contact resistance test: The contact resistance was measured according to the standard GB/T 20042.6-2011.

### Stability test:

The laminate structures of the platinum-conductive layer and the iridium catalyst layer obtained in Examples 1 to 6 and Comparative Examples 1 to 6 were transferred onto the surface of a perfluorosulfonic acid proton exchange membrane by a transfer method, and the PTFE substrate was removed to obtain membrane electrodes. A gas diffusion layer was then assembled, and the tests were carried out.

The obtained membrane electrodes were subjected to 10,000 voltage cycles (1.45 V (3 min) / 2.0 V (3 min)), and the voltage corresponding to a current density of 2 A/cm² was measured. The test results were shown in Table 1.

**Table 1 Contact resistance and stability test results**

| Items | Contact resistance(KΩ) | | Cycle | | | | |
|---|---|---|---|---|---|---|---|
| | First parallel testing | Second parallel testing | 0^{th} cycle | 1000^{th} cycle | 5000^{th} cycle | 10000^{th} cycle | Loss |
| Example 1 | 1.822 | 1.823 | 1.762V | 1.765V | 1.765V | 1.767V | 5mV |
| Example 2 | 1.809 | 1.811 | 1.761V | 1.766V | 1.768V | 1.774V | 13mV |
| Example 3 | 1.817 | 1.813 | 1.761V | 1.765V | 1.767V | 1.770V | 9mV |
| Example 4 | 1.833 | 1.837 | 1.765V | 1.769 | 1.772V | 1.774V | 9mV |
| Example 5 | 1.838 | 1.836 | 1.775V | 1.778V | 1.779V | 1.182V | 7mV |
| Example 6 | 1.819 | 1.823 | 1.771 | 1.774 | 1.776 | 1.776 | 5mV |
| Comparative Example 1 | 1.801 | 1.800 | 1.758V | 1.770V | 1.775V | 1.783V | 25mV |
| Comparative Example 2 | 1.845 | 1.848 | 1.781V | 1.783V | 1.785V | 1.788V | 7mV |
| Comparative Example 3 | 1.820 | 1.817 | 1.756V | 1.764 | 1.769 | 1.775V | 19mV |
| Comparative Example 4 | 1.843 | 1.836 | 1.785V | 1.791V | 1.794V | 1.796V | 11mV |
| Comparative Example 5 | 1.867 | 1.874 | 1.763V | 1.767V | 1.769 | 1.771 | 8mV |
| Comparative Example 6 | 1.923 | 1.929 | 1.794V | 1.797V | 1.799V | 1.780V | 6mV |

It can be seen from Table 1 that although Comparative Examples 1 and 3 exhibit low contact resistance comparable to the examples of the present application, their voltage loss values are much higher than those of the examples of the present application. On the other hand, although Comparative Examples 2, 4, 5, and 6 exhibit relatively small voltage loss values, their contact resistance values are higher. Therefore, compared with Comparative Examples 1 to 6, the membrane electrodes prepared using the anode composite catalyst layers of Examples 1 to 6 can achieve both low contact resistance and excellent stability.

### Membrane Electrode Performance Test

The membrane electrodes prepared above were tested using a water electrolysis test stand. The specific test method was as follows:

The test environment with a water resistivity greater than 3 MΩ/cm was prepared to ensure that the water and gas pipelines are correctly connected, and that the temperature control system can work properly.

A water electrolysis fixture was assembled where the water electrolysis fixture was placed on a table, and the components from bottom to top in the following order: cathode end plate → cathode gold-plated plate → graphite plate → cathode gasket → carbon paper → membrane electrode → anode gasket → sintered titanium plate → anode flow field plate → anode end plate were assembled. After placing all components, the screws was tightened in a fixed sequence using a torque wrench at torques of 2 → 3 → 4 → 5 N•m per turn. Then, the water electrolysis fixture was installed onto the test stand.

DC power supply load wires and the SENSE wires were installed. A flow meter was turned on so that the upper end of the float is close to 100 mL/min scale line. The heating button was pressed on until the fixture temperature was raised to the set temperature of 80 °C, and then start the test.

A polarization curve test was performed by loading the test program (increase by 0.2 A/cm² per stage, with each stage lasting four minutes).

The voltage values at different current densities were shown in Table 2. It can be shown by the results that, compared with Comparative Examples 2, 4, and 6, the membrane electrodes prepared using the anode composite catalyst layers of Examples 1 to 6 of the present application exhibit lower voltage values at the same current density when used in water electrolysis. This indicates that the anode composite catalyst layers prepared in the examples of the present application have better catalytic performance.

**Table 2 Membrane electrode performance test results**

| items | Current density | |
|---|---|---|
| | 2A/cm² | 3A/cm² |
| Example 1 | 1.762V | 1.877V |
| Example 2 | 1.761V | 1.876V |
| Example 3 | 1.761V | 1.877V |
| Example 4 | 1.765V | 1.886V |
| Example 5 | 1.775V | 1.901V |
| Example 6 | 1.771V | 1.896V |
| Comparative Example 2 | 1.781V | 1.910V |
| Comparative Example 4 | 1.785V | 1.922V |
| Comparative Example 6 | 1.794V | 1.955V |

The above description of the embodiments is provided to facilitate understanding and application of the present application by those of ordinary skill in the art. It will be apparent to those skilled in the art that various modifications can be easily made to these embodiments, and the general principles described herein can be applied to other embodiments without creative effort. Therefore, the present application is not limited to the embodiments described herein. Improvements and modifications made by those skilled in the art based on the disclosure of the present application without departing from the scope and spirit of the present application fall within the scope of the present application.

## Claims

1. An anode composite catalyst layer, located between a proton exchange membrane and a gas diffusion layer of a membrane electrode, **characterized by** comprising:
an iridium catalyst layer having a first surface and a second surface which are opposite to each other, wherein the first surface faces the proton exchange membrane and the second surface faces the gas diffusion layer, the iridium catalyst layer comprising a first ionomer and an iridium catalyst dispersed in the first ionomer; and
a platinum-conductive layer having a third surface and a fourth surface which are opposite to each other, wherein the third surface is in contact with the second surface of the iridium catalyst layer, and the fourth surface faces the gas diffusion layer, and the platinum-conductive layer comprises a second ionomer and platinum nanoparticles dispersed in the second ionomer and having a particle size of 10 nm to 500 nm.

2. The anode composite catalyst layer according to claim 1, **characterized in that** the particle size of the platinum nanoparticles is 90 nm to 120 nm; the platinum-conductive layer has a thickness of 0.3 µm to 1.5 µm; and a mass ratio of the platinum nanoparticles to the second ionomer is 1:(0.35 to 0.9).

3. The anode composite catalyst layer according to claim 1, **characterized in that** the first ionomer and the second ionomer each independently comprise one or more of Nafion D2020, Nafion NR50, Aquivion D79-25B, and HCD-1820.

4. The anode composite catalyst layer according to any one of claims 1 to 3, **characterized in that** the iridium catalyst is at least one of IrO₂, IrRuOₓ₁, IrO₂/TiO₂, IrO₂/NbOₓ₁, IrO₂/Ta₂O₅, IrO₂/WOₓ₁, or IrO₂/Nb₂O₅₋ₓ₂, wherein x₁ is 1 to 2, and x₂ is 0 to 3.

5. An anode composite catalyst layer slurry, **characterized by** comprising:
an iridium catalyst layer slurry comprising an iridium catalyst, a first ionomer, and a first solvent; and
a platinum-conductive layer slurry comprising platinum nanoparticles having a particle size of 10 nm to 500 nm, a second ionomer, and a second solvent.

6. The anode composite catalyst layer slurry according to claim 5, **characterized in that** a mass ratio of the iridium catalyst, the first ionomer, and the first solvent is 1:(0.1 to 0.5):(5 to 50); and a mass ratio of the platinum nanoparticles, the second ionomer, and the second solvent is 1:(0.35 to 0.9):(10 to 50).

7. The anode composite catalyst layer slurry according to claim 5 or 6, **characterized in that** the first ionomer and the second ionomer each independently comprise one or more of Nafion D2020, Nafion NR50, Aquivion D79-25B, and HCD-1820; the iridium catalyst is at least one of IrO₂, IrRuOₓ, IrO₂/TiO₂, IrO₂/NbOₓ, IrO₂/Ta₂O₅, IrO₂/WOₓ, or IrO₂/Nb₂O₅₋ₓ; and the first solvent and the second solvent are the same or different and are each independently at least one selected from isopropanol, ethylene glycol, ethanol, n-propanol, and water.

8. A method for the preparation of an anode composite catalyst layer, **characterized in that** the anode composite catalyst layer slurry according to any one of claims 5 to 7 is used for the preparation method.

9. The method for the preparation of an anode composite catalyst layer according to claim 8, **characterized in that** the preparation method comprises the steps of:
forming an iridium catalyst layer on a surface of a proton exchange membrane of a membrane electrode by a coating or transfer method using the iridium catalyst layer slurry; and
forming a platinum-conductive layer on a surface of the iridium catalyst layer by a coating or transfer method using the platinum-conductive layer slurry;
alternatively,
the preparation method comprises the steps of:
forming a platinum-conductive layer on a transfer substrate by a coating or transfer method using the platinum-conductive layer slurry;
forming an iridium catalyst layer on a surface of the platinum-conductive layer by a coating method using the iridium catalyst layer slurry; and
transferring a laminate structure of the platinum-conductive layer and the iridium catalyst layer onto a surface of a proton exchange membrane by a transfer method, while removing the transfer substrate.

10. A membrane electrode, **characterized by** comprising a proton exchange membrane, a gas diffusion layer, and the anode composite catalyst layer according to any one of claims 1 to 4.
